# EUROPEAN PATENT APPLICATION

(11) **EP 4 482 245 A1**
(43) Date of publication of application: **25.12.2024**
(21) Application number: 22926495.7
(22) Date of filing: 18.02.2022
(51) Int. Cl.: H04W 72/56, H04W 72/04, H04W 76/27, H04L 5/00

(54) **RESOURCE DETERMINATION METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/076937
(87) International publication number: WO 2023/155168

(57) **Abstract**

The present application relates to the field of mobile communications, and discloses a resource determination method and apparatus, a device, and a medium. The method comprises: a terminal receiving configuration information sent by a network device, the configuration information indicating at least two control resource sets of the terminal and TCI states corresponding to the control resource sets, and parameters of the at least two control resource sets being different; determining a target control resource set on the basis of the parameters of the at least two control resource sets; and determining a reference signal corresponding to the TCI state of the target control resource set as a failure detection resource. The parameters of the control resource sets are taken into consideration during the determination of the failure detection resource, so that the accuracy of the determined failure detection resource is ensured, and then the reliability of communications is ensured.

## Description

### TECHNICAL FIELD

The disclosure relates to a field of mobile communication, in particular to a method for resource determination, an apparatus for resource determination, a device and a storage medium.

### BACKGROUND

In mobile communication technologies, a network device indicates quasi co-location (QCL) information by configuring a transmission configuration indication (TCI) state for a control resource set. After a terminal acquires the TCI state of the control resource set, the terminal may move, and the movement may cause the current determined TCI state of the terminal to be incompetent, and thus the terminal needs to determine a failure detection resource. However, since parameters of the control resource sets are different, how to determine the failure detection resource according to the parameters of control resource sets is a problem to be solved urgently.

### SUMMARY

Embodiments of the disclosure provide a method for resource determination, an apparatus for resource determination, a device and a storage medium. Parameters of control resource sets are taken into account in determining a failure detection resource to ensure the accuracy of the determined failure detection resource, thereby ensuring the reliability of communication. The technical solutions are described in the following.

According to a first aspect of the disclosure, there is provided a method for resource determination. The method is performed by a terminal, and includes:
receiving configuration information sent by a network device, in which the configuration information indicates at least two control resource sets of the terminal and transmission configuration indication (TCI) states corresponding to the at least two control resource sets, and the at least two control resource sets have different parameters;
determining a target control resource set based on the parameters of the at least two control resource sets; and
determining a reference signal corresponding to a TCI state of the target control resource set as a failure detection resource.

According to a second aspect of the disclosure, there is provided a method for resource determination. The method is performed by a network device, and the method includes:
sending configuration information to a terminal, in which the configuration information indicates at least two control resource sets of a terminal and transmission configuration indication (TCI) states corresponding to the at least two control resource sets, and the at least two control resource sets have different parameters.

According to a third aspect of the disclosure, there is provided an apparatus for resource determination. The apparatus includes:
a receiving module, configured to receive configuration information sent by a network device, in which the configuration information indicates at least two control resource sets of a terminal and transmission configuration indication (TCI) states corresponding to the at least two control resource sets, and the at least two control resource sets have different parameters;
a set determining module, configured to determine a target control resource set based on the parameters of the at least two control resource sets; and
a resource determining module, configured to determine a reference signal corresponding to a TCI state of the target control resource set as a failure detection resource.

According to a fourth aspect of the disclosure, there is provided an apparatus for resource determination. The apparatus includes:
a sending module, configured to send configuration information to a terminal, in which the configuration information indicates at least two control resource sets of the terminal and transmission configuration indication (TCI) states corresponding to the at least two control resource sets, and the at least two control resource sets have different parameters.

According to a fifth aspect of the disclosure, there is provided a terminal. The terminal includes: a processor, a transceiver connected to the processor, and a memory for storing instructions executable by the processor. The processor is configured to load and execute the executable instructions to implement the above method for resource determination described in the first aspect.

According to a sixth aspect of the disclosure, there is provided a network device. The network device includes: a processor, a transceiver connected to the processor, and a memory for storing instructions executable by the processor. The processor is configured to load and execute the executable instructions to implement the above method for resource determination described in the second aspect.

According to a seventh aspect of the disclosure, there is provided a computer-readable storage medium having executable program codes stored thereon. When the executable program codes are loaded and executed by a processor, the above method for resource determination described in the first or second aspect is implemented.

According to an eighth aspect of the disclosure, there is provided a chip. The chip includes programmable logic circuits and/or program instructions for implementing the above methods for resource determination described in the first or second aspect, when running on a terminal or a network device.

According to a ninth aspect of the disclosure, there is provided a computer program product. When the computer program product is executed by a processor of a terminal or a network device, the above method for resource determination described in the first or second aspect is implemented.

In the solutions of embodiments of the disclosure, after the terminal acquires at least two control resource sets with different parameters, it determines the target control resource set based on the parameter of each control resource set and then determines the failure detection resource based on the target control resource set. It also performs the failure detection based on the failure detection resource, and takes into account the parameters of the control resource sets when determining the failure detection resource, so as to ensure the accuracy of the determined failure detection resource, thereby ensuring the reliability of communication.

### BRIEF DESCRIPTION OF THE DRAWINGS

In order to clearly illustrate technical solutions of embodiments of the disclosure, the accompanying drawings to be used in the description of the embodiments will be briefly introduced below. Obviously, the accompanying drawings in the following description are only some embodiments of the disclosure, and other accompanying drawings can be obtained according to these drawings for those skilled in the art without inventive work.
FIG. 1 illustrates a block diagram of a communication system of an exemplary embodiment of the disclosure.
FIG. 2 illustrates a flowchart of a method for resource determination of an exemplary embodiment of the disclosure.
FIG. 3 illustrates a flowchart of another method for resource determination of an exemplary embodiment of the disclosure.
FIG. 4 illustrates a flowchart of a method for resource determination of an exemplary embodiment of the disclosure.
FIG. 5 illustrates a block diagram of an apparatus for resource determination of an exemplary embodiment of the disclosure.
FIG. 6 illustrates a block diagram of an apparatus for resource determination of an exemplary embodiment of the disclosure.
FIG. 7 illustrates a block diagram of an apparatus for resource determination of an exemplary embodiment of the disclosure.
FIG. 8 illustrates a schematic diagram of a communication device of an exemplary embodiment of the disclosure.

### DETAILED DESCRIPTION

In order to make the purpose, technical solutions and advantages of the disclosure clearer, implementations of the disclosure will be described in further detail below in combination with the accompanying drawings.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a", "an" and "this" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining that".

The application scenarios of the disclosure are illustrated below.

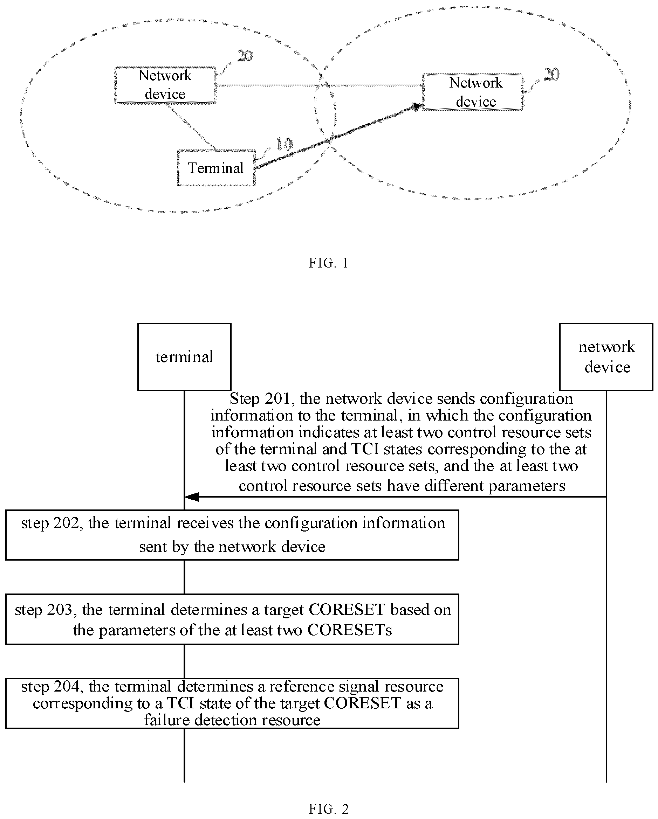

FIG. 1 illustrates a block diagram of a communication system of an exemplary embodiment of the disclosure. The communication system may include: a terminal 10 and a network device 20.

Generally, there may be a plurality of terminals 10, and one or more terminals 10 may be distributed in a cell managed by each network device 20. The terminal 10 may include various handheld devices with wireless communication functions, vehicle-mounted devices, wearable devices, computing devices or other processing devices connected to a wireless modem, as well as various forms of user equipment (UE) and mobile station (MS), etc. For the convenience of description, in the embodiments of the disclosure, the above-mentioned devices are collectively referred to as a terminal.

The network device 20 is a device deployed in an access network to provide a wireless communication function for the terminal 10. For the convenience of description, in the embodiments of the disclosure, the above-mentioned devices that provide the wireless communication function for the terminal 10 are collectively referred to as a network device. A connection may be established between the network device 20 and the terminal 10 via an air interface, to realize communication between each other, such as interaction of signaling and data. There may be multiple network devices 20, and two adjacent network devices 20 may communicate with each other in a wired or wireless manner. The terminal 10 may switch between different network devices 20 and establish connections with different network devices 20.

The network device 20 may include various forms of macro base stations, micro base stations, relay stations, and access points. In systems using different wireless access technologies, the names of devices with the function of the network device may be different. For example, in a 5G new radio (NR) system, it is called a gnodeB or gNB. As the communication technology evolves, the name "network device" may change.

FIG. 2 illustrates a flowchart of a method for resource determination of an exemplary embodiment of the disclosure. For example, the method may be performed by the terminal and the network device shown in FIG. 1. The method includes at least part of the following contents.

At step 201, the network device sends configuration information to the terminal, in which the configuration information indicates at least two control resource sets of the terminal and transmission configuration indication (TCI) states corresponding to the at least two control resource sets, and the at least two control resource sets have different parameters.

The TCI state includes QCL information, which includes at least one of QCL Type A, QCL Type B, QCL Type C, or QCL Type D. The QCL Type A, QCL Type B and QCL Type C information mainly include at least one of Doppler shift, Doppler spread, average delay, or delay spread. The QCL Type D corresponds to spatial reception parameter information. The QCL Type D is commonly referred to as beam information.

At step 202, the terminal receives the configuration information sent by the network device.

In the embodiment of the disclosure, the network device configures, via the configuration information, at least two control resource sets for the terminal and a TCI state corresponding to each control resource set. The at least two control resource sets configured by the network device for the terminal have different parameters. Optionally, the control resource set is represented by CORESET.

At step 203, the terminal determines a target CORESET based on the parameters of the at least two CORESETs.

At step 204, the terminal determines a reference signal resource corresponding to the TCI state of the target CORESET as a failure detection resource.

In an embodiment of the disclosure, after the network device configures the CORESETs for the terminal, the terminal may determine the target CORESET according to the parameters of the configured CORESETs, and determine the reference signal resource corresponding to the TCI state of the target CORESET as the failure detection resource.

If the terminal moves or the antenna rotates to another direction, the TCI state used by the terminal for sending or receiving may have problems, such as a beam failure problem, or a problem of radio link failure due to poor channel quality. Therefore, the terminal may determine the failure detection resource according to the target CORESET, and then perform detection based on the failure detection resource to determine whether the terminal fails to detect the TCI state or the QCL parameter, or detect radio link failure.

It is noted that the steps performed by the terminal in the embodiments of the disclosure may be implemented separately to form a new embodiment, and the steps performed by the network device may be implemented separately to form a new embodiment.

In the solutions of the embodiments of the disclosure, after the terminal acquires at least two CORESETs with different parameters, it determines the target CORESET based on the parameter of each CORESET and then determines the failure detection resource based on the target CORESET. It also performs the failure detection based on the failure detection resource, and takes into account the parameters of the CORESETs in determining the failure detection resource, to ensure the accuracy of the determined failure detection resource, thereby ensuring the reliability of communication.

Based on the embodiment of FIG. 2, the parameter of the CORESET includes at least one of:
a type of the CORESET;
a type of a search space set associated with the CORESET;
a period of a search space set associated with the CORESET;
an index identity document (ID) of the CORESET; or
a CORESET pool ID corresponding to the CORESET.

The type of the search space set includes at least one of:
a first type of search space set, in which the first type of search space set includes a user-specific search space set;
a second type of search space set, in which the second type of search space set includes a type-3 common search space set;
a third type of search space set, in which the third type of search space set includes a common search space set other than a type-0 common search space set and the type-3 common search space set; or
a fourth type of search space set, in which the fourth type of search space set includes the type-0 common search space set.

On the basis of the above, the types of the at least two CORESETs configured by the network device for the terminal includes a variety of types, and the TCI states corresponding to the types of the CORESETs are described below.

In the embodiment of the disclosure, the CORESET includes at least one of a first type of CORESET, a second type of CORESET or a third type of CORESET. Different types of CORESETs correspond to different indication information. Different indication information indicates different TCI states, and also indicates different types of CORESETs.

Configuration information of the first type of CORESET includes first indication information, which indicates a unified first TCI state of at least one channel and/or at least one signal. In all the embodiments of the disclosure, the "unified first TCI state" means that at least one channel and/or at least one signal share the first TCI state. The first indication information may also be understood as indicating the first TCI state corresponding to the first type of CORESET.

In some embodiments, the at least one channel includes an uplink channel and/or a downlink channel, and the at least one signal includes an uplink signal and/or a downlink signal.

The downlink channel includes a physical downlink control channel (PDCCH) (i.e., control information carried by a CORESET) and a physical downlink shared channel (PDSCH). The downlink signal includes a demodulation reference signal (DMRS) and a channel state information reference signal (CSI-RS). The uplink channel includes a physical uplink control channel (PUCCH) and a physical uplink shared channel (PUSCH). The uplink signal includes a sounding reference signal (SRS).

In embodiments of the disclosure, the at least one channel may include an uplink channel and a downlink channel, and the at least one signal may include an uplink signal and a downlink signal, in which case the first indication information indicates that uplink and downlink share a unified first TCI state. Alternatively, the at least one channel may only include a downlink channel, and the at least one signal may only include a downlink signal, in which case the first indication information indicates that downlink shares a unified first TCI state. The disclosure relates to the CORESET, which corresponds to a downlink channel, so that the disclosure does not address a case where the first indication information indicates that uplink shares a unified first TCI state.

Optionally, the first indication information includes a media access control control element (MAC CE) and/or downlink control information (DCI).

In some embodiments, the first type of CORESET is associated with the first type of search space set and/or the second type of search space set, which means that the first type of CORESET is associated with the first type of search space set, or the first type of CORESET is associated with the second type of search space set, or the first type of CORESET is associated with both the first type of search space set and the second type of search space set.

Optionally, the first type of CORESET is associated with not only the first type of search space set and/or the second type of search space set, but also with the third type of search space set.

The configuration information of the second type of CORESET includes second indication information that indicates whether the second type of CORESET uses a first TCI state.

It should be noted that in the embodiments of the disclosure, if the CORESET includes a second type of CORESET, it also needs to include a first type of CORESET, and the second indication information is configured to indicate whether the second type of CORESET uses the first TCI state corresponding to the first type of CORESET.

Optionally, the second indication information includes radio resource control (RRC) and/or MAC CE. That is, the network device indicates whether the second type of CORESET uses the first TCI state via the RRC and/or the MAC CE.

It is noted that when the second indication information indicates that the second type of CORESET does not use the first TCI state, the second TCI state of the second type of CORESET is indicted via the MAC CE.

In embodiments of the disclosure, if the second indication information indicates that the second type of CORESET does not use the first TCI state, it is necessary to configure the second TCI state for the second type of CORESET, and the second TCI state is configured for the second type of CORESET via the MAC CE.

Optionally, the second type of CORESET is associated with at least one of the second type of search space set, the third type of search space set, or the fourth type of search space set. That is, in the embodiments of the disclosure, the second type of CORESET is associated with the second type of search space set, or the second type of CORESET may be associated with the third type of search space set, or the second type of CORESET may be associated with the fourth type of search space set. Alternatively, the second type of CORESET is associated with the second type of search space set and the third type of search space set. Alternatively, the second type of CORESET is associated with the second type of search space set and the fourth type of search space set. Alternatively, the second type of CORESET is associated with the second type of search space set, the third type of search space set and the fourth type of search space set.

Optionally, the second type of CORESET is associated with at least one of the second type of search space set, the third type of search space set or the fourth type of search space set, and the second type of CORESET is also associated with the first type of search space set. That is, in addition to the search space sets associated with the second type of CORESET described above, the second type of CORESET may also be associated with the first type of search space set.

Configuration information of the third type of CORESET includes third indication information that indicates a third TCI state of the third type of CORESET.

Optionally, the third indication information includes a MAC CE.

Optionally, the third type of CORESET is associated with the fourth type of search space set.

In the technical solution of the embodiments of the disclosure, different indication information is configured to indicate different types of CORESETs, improving the accuracy of indicating the CORESET.

Based on the embodiment shown in FIG. 2, if certain conditions are met, the terminal determines the target CORESET based on the parameters of the at least two CORESETs configured via the configuration information. The following describes the conditions under which the target CORESET is determined.

A first condition is that in response to a number of CSI-RSs corresponding to the TCI states of the at least two CORESETs exceeds a first number, the terminal determines the target CORESET according to a target priority rule based on the parameters of the at least two CORESETs.

In the embodiments of the disclosure, the at least two CORESETs acquired by the terminal are deemed as a whole, and the CSI-RS resources corresponding to the TCI states of the at least two CORESETs are determined. If the number of CSI-RS resources exceeds the first number, it means that the terminal cannot adopt all the CSI-RS resources for detection and needs to select a part of the resources, and thus it can determine the CSI-RS resources through the target CORESET.

The first number is reported by the terminal or agreed upon by a protocol, which is not limited in embodiments of the disclosure.

Optionally, since there are multiple types of CORESETs and different types of CORESETs have different priorities, the target CORESET is determined from the CORESETs according to the target priority rule.

In some embodiments, the target priority rule includes at least one of the following rules.
(1) A first priority rule. The first priority rule is that a priority of the first type of CORESET is not less than a priority of the second type of CORESET, and a priority of the second type of CORESET is not less than a priority of the third type of CORESET.

In the embodiment of the disclosure, the priority of the CORESET is determined according to the type of the CORESET. According to the first priority rule, the first type of CORESET is selected first, followed by the second type of CORESET, and then the third type of CORESET.

For example, if the first type of CORESET includes a CORESET#4 and a CORESET#1, the second type of CORESET includes a CORESET#2, and the third type of CORESET includes a CORESET#3, the CORESET#4 and the CORESET#1 that belong to the first type of CORESET are determined as the target CORESETs firstly, and then the CORESET#2 is determined as the target CORESET.

(2) A second priority rule. The second priority rule is that a period of the search space set associated with the CORESET is inversely proportional to a priority of the CORESET.

In the embodiment of the disclosure, the period of the search space set corresponding to the CORESET is inversely proportional to the priority of the CORESET means that the longer the period of the search space set corresponding to the CORESET, the lower the priority of the CORESET, and the shorter the period of the search space set corresponding to the CORESET, the higher the priority of the CORESET.

When determining the target CORESET from the at least two CORESETs, the CORESET corresponding to the search space set having the shortest period is determined as the target CORESET firstly, and then excluding the determined target CORESET, the CORESET corresponding to the search space set having the shortest period in the remaining CORESETs is determined as the target CORESET, and so on, until all the target CORESETs are determined.

For example, if the CORESETs includes a CORESET#1, a CORESET#2, a CORESET#3 and a CORESET#4, according to the periods of the search space sets corresponding to the CORESETs, from short to long, the CORESETs are ranked in the following order: the CORESET#3, the CORESET#1, the CORESET#2 and the CORESET#4. According to the priorities, from high to low, the CORESETs are ranked in the following order: the CORESET#3, the CORESET#1, the CORESET#2 and the CORESET#4.

(3) A third priority rule. The third priority rule is that the index ID of the CORESET is proportional to the priority of the CORESET.

In the embodiments of the disclosure, the index ID of the CORESET is proportional to the priority of the CORESET means that the higher the index ID of the CORESET, the higher the priority of the CORESET, and the lower the index ID of the CORESET, the lower the priority of the CORESET.

When determining the target CORESET from the at least two CORESETs, the CORESET with the highest index ID is determined as the target CORESET firstly, and then excluding the determined target CORESET, the CORESET with the highest index ID among the remaining CORESETs is determined as the target CORESET, and so on, until all the target CORESETs are determined.

For example, if the CORESETs includes a CORESET#1, a CORESET#2, a CORESET#3, and a CORESET#4, according to the corresponding priorities, from high to low, the CORESETs are ranked in the following order: the CORESET#4, the CORESET#3, the CORESET#2, and the CORESET#1.

It should be noted that in an embodiment of the disclosure, without considering the first priority rule, the CORESETs include a CORESET#4 and a CORESET#1 that both correspond to a same TCI state#3, and include a CORESET#2 that corresponds to a TCI state#1, and include a CORESET#3 that corresponds to a TCI state#2, and the terminal can only support 2 CORESETs. In this case, according to the third priority rule, the CORESETs are ranked according to the priorities of CORESETs, from high to low, in the following order: the CORESET#4, the CORESET#3, the CORESET#2, and the CORESET#1, and the reference signals corresponding to the TCI states of the CORESET#4 and the CORESET#3 are determined as beam failure detection resources. Although the CORESET#1 also corresponds to the TCI state#3, it has a lower priority, and the CORESET with the highest index ID in the CORESETs corresponding to this TCI state is used to determine the final failure detection resource. Alternatively, in this case, according to the second priority rule, the CORESETs are ranked according to the periods of the search space sets corresponding to the CORESETs from short to long, i.e. the priorities of the CORESETs from high to low, in the following order: CORESET#3, CORESET#4, CORESET#2, CORESET#1, and reference signals corresponding to the TCI states of CORESET#4 and CORESET#3 are determined as beam failure detection resources. Although the CORESET#1 also corresponds to the TCI state#3, it has a lower priority, and the final failure detection resource is determined according to the priority of the CORESET whose associated search space set has the shortest period corresponding to the TCI state.

In other embodiments, when the above-described target priority rule includes at least two of the first priority rule, the second priority rule, or the third priority rule, the priorities of CORESETs are determined firstly according to a priority rule with the highest priority. If it is determined that there are multiple CORESETs having the same priority according to a priority rule with the highest priority, and a number of reference signal resources corresponding to the TCI states of the multiple CORESETs having the same priority is greater than a number of reference signal resources for failure detection that the terminal can support, the priorities of CORESETs are determined according to a priority rule with a relatively lower priority.

Optionally, the first priority rule has a higher priority than the second priority rule, and the second priority rule has a higher priority than the third priority rule.

In an embodiment of the disclosure, the terminal preferentially adopts the first priority rule to determine the target CORESET, and if it is determined that there are multiple CORESETs having the same priority according to the first priority rule, and the number of reference signal resources corresponding to the TCI states of the multiple CORESETs having the same priority is greater than the number of reference signal resources for failure detection that the terminal can support, the second priority rule is adopted to further determine the target CORESET from the multiple CORESETs having the same first priority. If the target CORESET cannot be determined according to the adopted second priority rule, the third priority rule is then adopted for determining the target CORESET.

For example, if the CORESETs configured for the terminal are all first type of CORESETs and the TCI state corresponding to each CORESET in the first type of CORESETs is the same, or the CORESETs configured for the terminal are all second type of CORESETs and the TCI state corresponding to each CORESET in the second type of CORESETs is the same, all the CORESETs configured for the terminal may be determined directly as the target CORESETs.

If the CORESETs configured for the terminal are all third type of CORESETs, it is necessary to determine the priorities of the CORESETs according to the second priority rule. If the period of the search space set corresponding to each CORESE is the same, the priorities of the CORESETs are further determined according to the third priority rule.

Optionally, the second priority rule has a higher priority than the first priority rule, and the first priority rule has a higher priority than the third priority rule.

In an embodiment of the disclosure, the terminal preferentially adopts the second priority rule to determine the target CORESET. If the target CORESET cannot be determined by adopting the second priority rule, the first priority rule is adopted to determine the target CORESET. If the target CORESET still cannot be determined by adopting the first priority rule, the third priority rule is then adopted to determine the target CORESET.

For example, if the periods of the search space sets corresponding to the CORESETs configured for the terminal are the same, the target CORESET is determined according to the first priority rule, and the determination is similar to the above embodiments, which will not be repeated herein. If the target CORESET still cannot be determined according to the first priority rule, the third priority rule is adopted to determine the target CORESET.

Optionally, the second priority rule has a higher priority than the third priority rule, and the third priority rule has a higher priority than the first priority rule.

In an embodiment of the disclosure, the terminal preferentially adopts the second priority rule to determine the target CORESET. If the target CORESET cannot be determined according to the second priority rule, the third priority rule is adopted to determine the target CORESET. If the target CORESET still cannot be determined according to the third priority rule, the first priority rule is adopted to determine the target CORESET.

It is noted that in an embodiment of the disclosure, without considering the first priority rule, the CORESETs include a CORESET#4 and a CORESET#1 that both correspond to a same TCI state#3, and include a CORESET#2 that corresponds to a TCI state#1, and include a CORESET#3 that corresponds to a TCI state#2, and the terminal can only support 2 CORESETs. In this case, according to the third priority rule, the CORESETs are ranked according to the priorities of CORESETs, from high to low, in the following order: the CORESET#4, the CORESET#3, the CORESET#2, and the CORESET#1, the reference signals corresponding to the TCI states of the CORESET#4 and the CORESET#3 are determined as the beam failure detection resources. Although the CORESET#1 also corresponds to the TCI state#3, it has a lower priority, and the CORESET with the highest index ID in the CORESETs corresponding to the TCI state is used to determine the final failure detection resource. Alternatively, in this case, according to the second priority rule, the CORESETs are ranked according to the periods of the search space sets corresponding to the CORESETs from short to long, i.e., according to the priorities of the CORESETs from high to low, in the following order: the CORESET#3, the CORESET#4, the CORESET#2, the CORESET#1, and reference signals corresponding to the TCI states of CORESET#4 and CORESET#3 are determined as the beam failure detection resources. Although the CORESET#1 also corresponds to the TCI state#3, it has a lower priority, and the final failure detection resource is determined according to the priority of the CORESET whose associated search space set has the shortest period corresponding to this TCI state.

In the solutions provided by embodiments of the disclosure, the priority of each priority rule is specified to facilitate the terminal in determining the priority rule to be adopted in preference. When the terminal is unable to determine the target CORESET by adopt the priority rule with the highest priority, other priority rules can be adopted to ensure the accuracy of the terminal in determining the target CORESET.

A second condition is that the terminal divides the at least two CORESETs into a first CORESET group and a second CORESET group according to the CORESET pool ID corresponding to the CORESET. The CORESET pool ID corresponding to the first CORESET group is a first ID, and the CORESET pool ID corresponding to the second CORESET group is a second ID. In a case that a number of CSI-RSs corresponding to a TCI state of any CORESET group exceeds a second number, the target CORESET is determined according to the target priority rule based on a parameter of a CORESET within the CORESET group.

In an embodiment of the disclosure, the CORESETs correspond to different CORESET pool IDs, which means that the CORESETs can be divided into different groups, e.g., a first CORESET group and a second CORESET group, according to the CORESET pool IDs.

After the terminal divides the CORESETs into different groups, it determines whether a number of CSI - RSs corresponding to the TCI states of the CORESET groups is greater than a second number. If the number of CSI-RSs corresponding to the TCI state of any CORESET group is greater than the second number, it determines the target CORESET corresponding to the CORESET group according to the target priority rule.

In some embodiments, the target priority rule includes at least one of:
a first priority rule, the first priority rule being that a priority of the first type of control resource set is not less than a priority of the second type of control resource set, and a priority of the second type of control resource set is not less than a priority of the third type of control resource set;
a second priority rule, the second priority rule being that a period of the search space set associated with the control resource set is inversely proportional to a priority of the control resource set; or
a third priority rule, the third priority rule being an index ID of the control resource set is proportional to the priority of the control resource set.

The target priority rule in the embodiment of the disclosure is similar to the target priority rule in the above embodiments and will not be repeated here.

In other embodiments, in the case where the above target priority rule includes the first priority rule, the second priority rule, and the third priority rule at the same time, the priorities of CORESETs are determined firstly according to the priority rule with the highest priority. If the priorities of CORESETs cannot be determined according to the priority rule with the highest priority, the priorities of CORESETs are determined according to the priority rule with a relatively lower priority.

Optionally, the first priority rule has a higher priority than the second priority rule, and the second priority rule has a higher priority than the third priority rule.

Optionally, the second priority rule has a higher priority than the first priority rule, and the first priority rule has a higher priority than the third priority rule.

Optionally, the second priority rule has a higher priority than the third priority rule, and the third priority rule has a higher priority than the first priority rule.

The priorities of the priority rules in the embodiment of the disclosure are similar to the priorities of the priority rules in the above embodiments, and will not be repeated herein.

In the solutions provided by the embodiments of the disclosure, the priority of each priority rule is specified to facilitate the terminal in determining the priority rule to be preferentially adopted. When the terminal is unable to determine the target CORESET by adopting the priority rule with the highest priority, other priority rules can be adopted to ensure the accuracy of the terminal in determining the target CORESET.

It should be noted that the above embodiments may be separated into new embodiments or combined with other embodiments as new embodiments, and the combinations of embodiments are not limited in the disclosure.

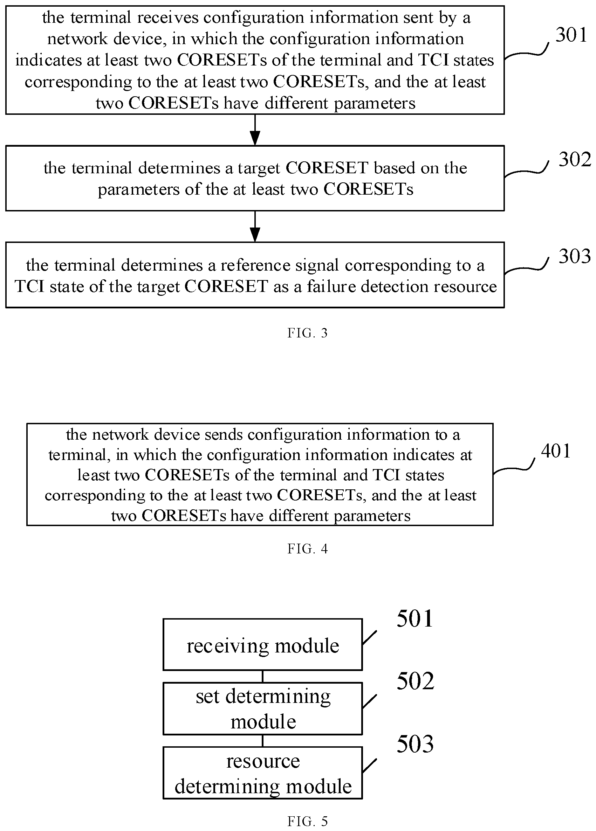

FIG. 3 illustrates a flowchart of another method for resource determination of an exemplary embodiment of the disclosure. For example, the method may be performed by the terminal shown in FIG. 1. The method includes at least part of the following contents.

At step 301, the terminal receives configuration information sent by a network device, in which the configuration information indicates at least two CORESETs of the terminal and TCI states corresponding to the at least two CORESETs, and the at least two CORESETs have different parameters.

At step 302, the terminal determines a target CORESET based on the parameters of the at least two CORESETs.

At step 303, the terminal determines a reference signal corresponding to the TCI state of the target CORESET as a failure detection resource.

Steps 301-303 are similar to steps 202-204 above and will not be repeated here.

In some embodiments, the parameter of the CORESET includes at least one of:
a type of the CORESET;
a type of a search space set associated with the CORESET;
a period of a search space set associated with the CORESET;
an index ID of the CORESET; or
a CORESET pool ID corresponding to the CORESET.

Optionally, the type of the search space set includes at least one of:
a first type of search space set, in which the first type of search space set includes a user-specific search space set;
a second type of search space set, in which the second type of search space set includes a type-3 common search space set;
a third type of search space set, in which the third type of search space set includes a common search space set other than a type-0 common search space set and the type-3 common search space set; or
a fourth type of search space set, in which the fourth type of search space set includes the type-0 common search space set.

In some embodiments, the CORESET includes at least one of a first type of CORESET, a second type of CORESET or a third type of CORESET;
configuration information of the first type of CORESET includes first indication information, and the first indication information indicates a unified first TCI state of at least one channel and/or at least one signal;
configuration information of the second type of CORESET includes second indication information, and the second indication information indicates whether the second type of CORESET uses the first TCI state; and
configuration information of the third type of CORESET includes third indication information, and the third indication information indicates a third TCI state of the third type of CORESET.

Optionally, the second indication information includes a MAC CE, and the MAC CE is configured to indicate a second TCI state of the second type of CORESET.

Optionally, the first type of CORESET is associated with the first type of search space set and/or the second type of search space set;
or,
the first type of CORESET is associated with the first type of search space set and/or the second type of search space set, and the first type of CORESET is associated with the third type of search space set.

In some embodiments, the second type of CORESET is associated with at least one of the second type of search space set, the third type of search space set, or the fourth type of search space set;
or,
the second type of CORESET is associated with at least one of the second type of search space set, the third type of search space set, or the fourth type of search space set, and the second type of CORESET is associated with the first type of search space set.

In some embodiments, the third type of CORESET is associated with the fourth type of search space set.

In some embodiments, determining the target CORESET based on the parameters of the at least two CORESETs, includes:
in response to a number of CSI-RSs corresponding to the TCI states of the at least two CORESETs exceeds a first number, determining the target CORESETs according to a target priority rule based on the parameters of the at least two CORESETs.

In some embodiments, determining the target CORESET based on the parameters of the at least two CORESETs, includes:
dividing the at least two CORESETs into a first CORESET group and a second CORESET group according to the CORESET pool ID corresponding to the CORESET, the CORESET pool ID corresponding to the first CORESET group being a first ID, and the CORESET pool ID corresponding to the second CORESET group being a second ID; and
in response to a number of CSI-RSs corresponding to a TCI state of any CORESET group exceeds a second number, determining the target CORESET according to a target priority rule based on a parameter of a CORESET within the CORESET group.

Optionally, the target priority rule includes at least one of:
a first priority rule, the first priority rule being that a priority of the first type of CORESET is not less than a priority of the second type of CORESET, and a priority of the second type of CORESET is not less than a priority of the third type of CORESET;
a second priority rule, the second priority rule being that a period of the search space set associated with the CORESET is inversely proportional to a priority of the CORESET; and
a third priority rule, the third priority rule being that the index ID of the CORESET is proportional to the priority of the CORESET.

Optionally, the first priority rule has a higher priority than the second priority rule, and the second priority rule has a higher priority than the third priority rule; or,
the second priority rule has a higher priority than the first priority rule, and the first priority rule has a higher priority than the third priority rule; or,
the second priority rule has a higher priority than the third priority rule, and the third priority rule has a higher priority than the first priority rule.

The contents in the embodiments of the disclosure are similar to the embodiment shown in FIG. 2 above and will not be repeated herein.

In the solutions of the embodiments of the disclosure, after the terminal acquires at least two CORESETs with different parameters, it determines the target CORESET based on the parameter of each CORESET and then determines the failure detection resource based on the target CORESET. It also performs the failure detection based on the failure detection resource, and takes into account the parameters of the CORESETs in determining the failure detection resource, to ensure the accuracy of the determined failure detection resource, thereby ensuring the reliability of communication.

FIG. 4 illustrates a flowchart of another method for resource determination of an exemplary embodiment of the disclosure. For example, the method may be performed by a network device shown in FIG. 1. The method includes at least part of the following contents.

At step 401, the network device sends configuration information to a terminal, in which the configuration information indicates at least two CORESETs of the terminal and TCI states corresponding to the at least two CORESETs, and the at least two CORESETs have different parameters.

In some embodiments, the parameter of the CORESET includes at least one of:
a type of the CORESET;
a type of a search space set associated with the CORESET;
a period of a search space set associated with the CORESET;
an index ID of the CORESET; or
a CORESET pool ID corresponding to the CORESET.

Optionally, the type of the search space set includes at least one of:
a first type of search space set, in which the first type of search space set includes a user-specific search space set;
a second type of search space set, in which the second type of search space set includes a type-3 common search space set;
a third type of search space set, in which the third type of search space set includes a common search space set other than a type-0 common search space set and the type-3 common search space set; or
a fourth type of search space set, in which the fourth type of search space set includes the type-0 common search space set.

Optionally, the CORESET includes at least one of a first type of CORESET, a second type of CORESET or a third type of CORESET;
configuration information of the first type of CORESET includes first indication information, and the first indication information indicates a unified first TCI state of at least one channel and/or at least one signal;
configuration information of the second type of CORESET includes second indication information, and the second indication information indicates whether the second type of CORESET uses the first TCI state; and
configuration information of the third type of CORESET includes third indication information, and the third indication information indicates a third TCI state of the third type of CORESET.

Optionally, the second indication information includes a MAC CE, and the MAC CE is configured to indicate a second TCI state for the second type of CORESET.

Optionally, the first type of CORESET is associated with the first type of search space set and/or the second type of search space set;
or,
the first type of CORESET is associated with the first type of search space set and/or the second type of search space set, and the first type of CORESET is associated with the third type of search space set.

In some embodiments, the second type of CORESET is associated with at least one of the second type of search space set, the third type of search space set, or the fourth type of search space set;
or,
the second type of CORESET is associated with at least one of the second type of search space set, the third type of search space set, or the fourth type of search space set, and the second type of CORESET is associated with the first type of search space set.

Optionally, the third type of CORESET is associated with the fourth type of search space set.

In the solutions of the embodiments of the disclosure, the network device configures the CORESETs and the TCI states of the CORESETs for the terminal. After the terminal acquires the at least two CORESETs with different parameters, it determines the target CORESET based on the parameter of each CORESET and then determines the failure detection resource based on the target CORESET. It also performs the failure detection based on the failure detection resource, and takes into account the parameters of the CORESETs in determining the failure detection resource, to ensure the accuracy of the determined failure detection resource, thereby ensuring the reliability of communication.

FIG. 5 illustrates a block diagram of an apparatus for resource determination of an exemplary embodiment of the disclosure. As illustrated in FIG. 5, the apparatus includes:
a receiving module 501, configured to receive configuration information sent by a network device, in which the configuration information indicates at least two CORESETs of a terminal and TCI states corresponding to the at least two CORESETs, and the at least two CORESETs have different parameters;
a set determining module 502, configured to determine a target CORESET based on the parameters of the at least two CORESETs; and
a resource determining module 503, configured to determine a reference signal corresponding to a TCI state of the target CORESET as a failure detection resource.

In some embodiments, the parameter of the CORESET includes at least one of:
a type of the CORESET;
a type of a search space set associated with the CORESET;
a period of a search space set associated with the CORESET;
an index ID of the CORESET; or
a CORESET pool ID corresponding to the CORESET.

In some embodiments, the type of the search space set includes at least one of the following:
a first type of search space set, in which the first type of search space set includes a user-specific search space set;
a second type of search space set, in which the second type of search space set includes a type-3 common search space set;
a third type of search space set, in which the third type of search space set includes a common search space set other than a type-0 common search space set and the type-3 common search space set; and
a fourth type of search space set, in which the fourth type of search space set includes the type-0 common search space set.

In some embodiments, the CORESET includes at least one of a first type of CORESET, a second type of CORESET or a third type of CORESET;
configuration information of the first type of CORESET includes first indication information, and the first indication information indicates a unified first TCI state of at least one channel and/or at least one signal;
configuration information of the second type of CORESET includes second indication information, and the second indication information indicates whether the second type of CORESET uses the first TCI state; and
configuration information of the third type of CORESET includes third indication information, and the third indication information indicates a third TCI state of the third type of CORESET.

In some embodiments, the second indication information includes a MAC CE, and the MAC CE is configured to indicate a second TCI state of the second type of CORESET.

In some embodiments, the first type of CORESET is associated with the first type of search space set and/or the second type of search space set;
or,
the first type of CORESET is associated with the first type of search space set and/or the second type of search space set, and the first type of CORESET is associated with the third type of search space set.

In some embodiments, the second type of CORESET is associated with at least one of the second type of search space set, the third type of search space set, or the fourth type of search space set;
or,
the second type of CORESET is associated with at least one of the second type of search space set, the third type of search space set, or the fourth type of search space set, and the second type of CORESET is associated with the first type of search space set.

In some embodiments, the third type of CORESET is associated with the fourth type of search space set.

In some embodiments, the set determining module 502 is configured to, in response to a number of CSI-RSs corresponding to the TCI states of the at least two CORESETs exceeds a first number, determining the target CORESET according to a target priority rule based on the parameters of the at least two CORESETs.

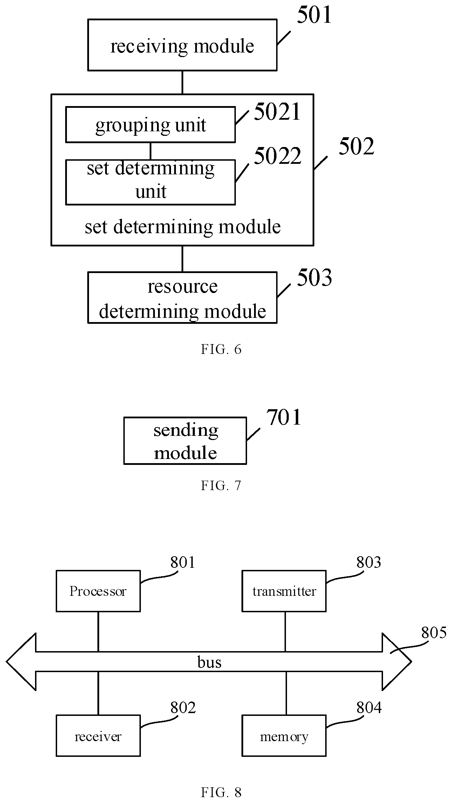

In some embodiments, as illustrated in FIG. 6, the set determining module 502 includes:
a grouping unit 5021, configured to divide the at least two CORESETs into a first CORESET group and a second CORESET group according to the CORESET pool ID corresponding to the CORESET, the CORESET pool ID corresponding to the first CORESET group being a first ID, and the CORESET pool ID corresponding to the second CORESET group being a second ID; and
a set determining unit 5022, configured to, in response to a number of CSI-RSs corresponding to a TCI state of any CORESET group exceeds a second number, determine the target CORESET according to a target priority rule based on a parameter of a CORESET within the CORESET group.

In some embodiments, the target priority rule includes at least one of:
a first priority rule, the first priority rule being that a priority of the first type of CORESET is not less than a priority of the second type of CORESET, and a priority of the second type of CORESET is not less than a priority of the third type of CORESET;
a second priority rule, the second priority rule being that a period of the search space set associated with the CORESET is inversely proportional to a priority of the CORESET; or
a third priority rule, the third priority rule being that the index ID of the CORESET is proportional to the priority of the CORESET.

In some embodiments, the first priority rule has a higher priority than the second priority rule, and the second priority rule has a higher priority than the third priority rule; or,
the second priority rule has a higher priority than the first priority rule, and the first priority rule has a higher priority than the third priority rule; or,
the second priority rule has a higher priority than the third priority rule, and the third priority rule has a higher priority than the first priority rule.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the apparatus can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.

FIG. 7 illustrates a block diagram of another apparatus for resource determination of an exemplary embodiment of the disclosure. As illustrated in FIG. 7, the apparatus includes:
a sending module 701, configured to send configuration information to a terminal, in which the configuration information indicates at least two CORESETs of the terminal and TCI states corresponding to the at least two CORESETs, and the at least two CORESETs have different parameters.

In some embodiments, the parameter of the CORESET includes at least one of:
a type of the CORESET;
a type of a search space set associated with the CORESET;
a period of a search space set associated with the CORESET;
an index ID of the CORESET; or
a CORESET pool ID corresponding to the CORESET.

In some embodiments, the type of the search space set includes at least one of:
a first type of search space set, in which the first type of search space set includes a user-specific search space set;
a second type of search space set, in which the second type of search space set includes a type-3 common search space set;
a third type of search space set, in which the third type of search space set includes a common search space set other than a type-0 common search space set and the type-3 common search space set; and
a fourth type of search space set, in which the fourth type of search space set includes the type-0 common search space set.

In some embodiments, the CORESET includes at least one of a first type of CORESET, a second type of CORESET or a third type of CORESET;
configuration information of the first type of CORESET includes first indication information, and the first indication information indicates a unified first TCI state of at least one channel and/or at least one signal;
configuration information of the second type of CORESET includes second indication information, and the second indication information indicates whether the second type of CORESET uses the first TCI state; and
configuration information of the third type of CORESET includes third indication information, and the third indication information indicates a third TCI state of the third type of CORESET.

In some embodiments, the second indication information includes a MAC CE, and the MAC CE is configured to indicate a second TCI state of the second type of CORESET.

In some embodiments, the first type of CORESET is associated with the first type of search space set and/or the second type of search space set;
or,
the first type of CORESET is associated with the first type of search space set and/or the second type of search space set, and the first type of CORESET is associated with the third type of search space set.

In some embodiments,
the second type of CORESET is associated with at least one of the second type of search space set, the third type of search space set, and the fourth type of search space set;
   or,
the second type of CORESET is associated with at least one of the second type of search space set, the third type of search space set, or the fourth type of search space set, and the second type of CORESET is associated with the first type of search space set.

In some embodiments, the second type of CORESET is associated with the first type of search space set and/or the second type of search space set.

In some embodiments, the third type of CORESET is associated with the fourth type of search space set.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the apparatus can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.

FIG. 8 illustrates a schematic diagram of a communication device of an exemplary embodiment of the disclosure. The communication device includes: a processor 801, a receiver 802, a transmitter 803, a memory 804 and a bus 805.

The processor 801 includes one or more processing cores, and is able to perform various functional applications as well as information processing by running software programs and modules.

The receiver 802 and the transmitter 803 may be realized as a communication component, which may be a communication chip.

The memory 804 is connected to the processor 801 via a bus 805.

The memory 804 may be used to store at least one program code. The processor 801 is configured to execute the at least one program code to implement steps in the method embodiments described above.

The communication device may be a terminal or a network device. The memory 804 may be implemented by any type of volatile or nonvolatile storage device or a combination thereof. The volatile or nonvolatile storage device includes, but is not limited to, a magnetic disk or optical disk, an electrically erasable programmable read-only memory (EEPROM), an erasable programmable read-only memory (EPROM), a static random access memory (SRAM), a read-only memory (ROM), a magnetic memory, a flash memory, and a programmable ROM (PROM).

In an exemplary embodiment, a computer-readable storage medium having executable program codes stored thereon is provided. When the executable program codes are loaded and executed by a processor, the method for resource determination performed by the communication device provided by each method embodiment is implemented.

In an exemplary embodiment, a chip is provided. The chip includes a programmable logic circuit and/or program instructions. When the chip runs on a terminal or a network device, the method for resource determination provided in each method embodiment is implemented.

In an embodiment, a computer program product is provided. When the computer program product is executed by a processor of a terminal or a network device, the method for resource determination provided in each method embodiment is implemented.

Those skilled in the art understand that all or some of the steps for realizing the above embodiments may be accomplished by hardware or by a program instructing corresponding hardware. The program may be stored in a computer-readable storage medium, and the storage medium referred to above may be a ROM, a magnetic disk or optical disc.

The foregoing are only optional embodiments of the disclosure and are not intended to limit this disclosure. Any modifications, equivalent substitutions, or improvements made within the spirit and principles of this disclosure shall be included in the scope of protection of the disclosure.

## Claims

1. A method for resource determination, performed by a terminal, comprising:
receiving configuration information sent by a network device, wherein the configuration information indicates at least two control resource sets of the terminal and transmission configuration indication (TCI) states corresponding to the at least two control resource sets, and the at least two control resource sets have different parameters;
determining a target control resource set based on the parameters of the at least two control resource sets; and
determining a reference signal corresponding to a TCI state of the target control resource set as a failure detection resource.

2. The method of claim 1, wherein the parameter of the control resource set comprises at least one of:
a type of the control resource set;
a type of a search space set associated with the control resource set;
a period of a search space set associated with the control resource set;
an index identity document (ID) of the control resource set; or
a control resource set pool ID corresponding to the control resource set.

3. The method of claim 2, wherein the type of the search space set comprises at least one of:
a first type of search space set, wherein the first type of search space set comprises a user-specific search space set;
a second type of search space set, wherein the second type of search space set comprises a type-3 common search space set;
a third type of search space set, wherein the third type of search space set comprises a common search space set other than a type-0 common search space set and the type-3 common search space set; or
a fourth type of search space set, wherein the fourth type of search space set comprises the type-0 common search space set.

4. The method of claim 2 or 3, wherein the control resource set comprises at least one of a first type of control resource set, a second type of control resource set or a third type of control resource set;
configuration information of the first type of control resource set comprises first indication information, and the first indication information indicates a unified first TCI state of at least one channel and/or at least one signal;
configuration information of the second type of control resource set comprises second indication information, and the second indication information indicates whether the second type of control resource set uses the first TCI state; and
configuration information of the third type of control resource set comprises third indication information, and the third indication information indicates a third TCI state of the third type of control resource set.

5. The method of claim 4, wherein the second indication information comprises a media access control control element (MAC CE), and the MAC CE is configured to indicate a second TCI state of the second type of control resource set.

6. The method of claim 4, wherein the first type of control resource set is associated with the first type of search space set and/or the second type of search space set;
or,
the first type of control resource set is associated with the first type of search space set and/or the second type of search space set, and the first type of control resource set is associated with the third type of search space set.

7. The method of claim 4, wherein the second type of control resource set is associated with at least one of the second type of search space set, the third type of search space set, or the fourth type of search space set;
or,
the second type of control resource set is associated with at least one of the second type of search space set, the third type of search space set, or the fourth type of search space set, and the second type of control resource set is associated with the first type of search space set.

8. The method of claim 4, wherein the third type of control resource set is associated with the fourth type of search space set.

9. The method of any one of claims 1-4, wherein determining the target control resource set based on the parameters of the at least two control resource sets, comprises:
in response to a number of channel state information reference signals (CSI-RSs) corresponding to the TCI states of the at least two control resource sets exceeds a first number, determining the target control resource set according to a target priority rule based on the parameters of the at least two control resource sets.

10. The method of any one of claims 1-4, wherein determining the target control resource set based on the parameters of the at least two control resource sets, comprises:
dividing the at least two control resource sets into a first control resource set group and a second control resource set group according to the control resource set pool ID corresponding to the control resource set, the control resource set pool ID corresponding to the first control resource set group being a first ID, and the control resource set pool ID corresponding to the second control resource set group being a second ID; and
in response to a number of CSI-RSs corresponding to a TCI state of any control resource set group exceeds a second number, determining the target control resource set according to a target priority rule based on a parameter of a control resource set within the control resource set group.

11. The method of claim 9 or 10, wherein the target priority rule comprises at least one of:
a first priority rule, the first priority rule being that a priority of the first type of control resource set is not less than a priority of the second type of control resource set, and a priority of the second type of control resource set is not less than a priority of the third type of control resource set;
a second priority rule, the second priority rule being that the period of the search space set associated with the control resource set is inversely proportional to a priority of the control resource set; or
a third priority rule, the third priority rule being that the index ID of the control resource set is proportional to the priority of the control resource set.

12. The method of claim 11, wherein the first priority rule has a higher priority than the second priority rule, and the second priority rule has a higher priority than the third priority rule; or,
the second priority rule has a higher priority than the first priority rule, and the first priority rule has a higher priority than the third priority rule; or,
the second priority rule has a higher priority than the third priority rule, and the third priority rule has a higher priority than the first priority rule.

13. A method for resource determination, performed by a network device, comprising:
sending configuration information to a terminal, wherein the configuration information indicates at least two control resource sets of the terminal and transmission configuration indication (TCI) states corresponding to the at least two control resource sets, and the at least two control resource sets have different parameters.

14. The method of claim 13, wherein the parameter of the control resource set comprises at least one of:
a type of the control resource set;
a type of a search space set associated with the control resource set;
a period of a search space set associated with the control resource set;
an index identity document (ID) of the control resource set; or
a control resource set pool ID corresponding to the control resource set.

15. The method of claim 14, wherein the type of the search space set comprises at least one of:
a first type of search space set, wherein the first type of search space set comprises a user-specific search space set;
a second type of search space set, wherein the second type of search space set comprises a type-3 common search space set;
a third type of search space set, wherein the third type of search space set comprises a common search space set other than a type-0 common search space set and the type-3 common search space set; or
a fourth type of search space set, wherein the fourth type of search space set comprises the type-0 common search space set.

16. The method of claim 14 or 15, wherein the control resource set comprises at least one of a first type of control resource set, a second type of control resource set or a third type of control resource set;
configuration information of the first type of control resource set comprises first indication information, and the first indication information indicates a unified first TCI state of at least one channel and/or at least one signal;
configuration information of the second type of control resource set comprises second indication information, and the second indication information indicates whether the second type of control resource set uses the first TCI state; and
configuration information of the third type of control resource set comprises third indication information, and the third indication information indicates a third TCI state of the third type of control resource set.

17. The method of claim 16, wherein the second indication information comprises a media access control control element (MAC CE), and the MAC CE is configured to indicate a second TCI state of the second type of control resource set.

18. The method of claim 16, wherein the first type of control resource set is associated with the first type of search space set and/or the second type of search space set;
or,
the first type of control resource set is associated with the first type of search space set and/or the second type of search space set, and the first type of control resource set is associated with the third type of search space set.

19. The method of claim 16, wherein the second type of control resource set is associated with at least one of the second type of search space set, the third type of search space set, or the fourth type of search space set;
or,
the second type of control resource set is associated with at least one of the second type of search space set, the third type of search space set, or the fourth type of search space set, and the second type of control resource set is associated with the first type of search space set.

20. The method of claim 16, wherein the third type of control resource set is associated with the fourth type of search space set.

21. An apparatus for resource determination, comprising:
a receiving module, configured to receive configuration information sent by a network device, wherein the configuration information indicates at least two control resource sets of a terminal and transmission configuration indication (TCI) states corresponding to the at least two control resource sets, and the at least two control resource sets have different parameters;
a set determining module, configured to determine a target control resource set based on the parameters of the at least two control resource sets; and
a resource determining module, configured to determine a reference signal corresponding to a TCI state of the target control resource set as a failure detection resource.

22. An apparatus for resource determination, comprising:
a sending module, configured to send configuration information to a terminal, wherein the configuration information indicates at least two control resource sets of the terminal and transmission configuration indication (TCI) states corresponding to the at least two control resource sets, and the at least two control resource sets have different parameters.

23. A terminal, comprising:
a processor; and
a transceiver connected to the processor;
wherein the processor is configured to load and execute executable instructions to implement the method for resource determination of any one of claims 1-12.

24. A network device, comprising:
a processor; and
a transceiver connected to the processor;
wherein the processor is configured to load and execute executable instructions to implement the method for resource determination of any one of claims 13-20.

25. A computer readable storage medium having stored thereon executable program codes that, when being loaded and executed by a processor, implement the method for resource determination of any one of claims 1-20 .

26. A computer program product, wherein when the computer program product is executed by a processor of a terminal or a network device, the method for resource determination of any one of claims 1-20 is implemented.
